# EUROPÄISCHE PATENTSCHRIFT

(11) **EP 1 332 794 B1**
(45) Veröffentlichungstag und Bekanntmachung des Hinweises auf die Patenterteilung: **18.04.2012**
(21) Anmeldenummer: 03000637.3
(22) Anmeldetag: 15.01.2003
(51) Int. Cl.: B01J 19/32

(54) **Einbauten für Packungskolonnen**
Packing elements for packed columns
Garnissage structuré pour des colonnes garnies

(30) Priorität: 31.01.2002 DE 10203819
(43) Veröffentlichungstag der Anmeldung: 06.08.2003
(73) Patentinhaber: Ludwig Michl GmbH, 83629 Wattersdorf (DE)
(72) Erfinder: Stichlmair, Johann, Prof. Dr.-Ing., 81667 München (DE)
(74) Vertreter: Beckord, Klaus

(56) Entgegenhaltungen:
- EP-A- 1 254 705
- CH-A- 438 217
- US-A- 5 154 859
- US-A- 5 441 793

## Beschreibung

Die Erfindung betrifft eine neuartige Stoffaustauschpackung mit erhöhter Querverteilung und Quervermischung der Gas- und Flüssigkeitsströme. Die neuartige Stoffaustauschpackung wird über die Höhe verteilt mehrfach alternativ zur bekannten Stoffaustauschpackung in die Kolonne eingebaut mit dem Ziel, die lokalen Mengen und Konzentrationen der Stoffströme über den Kolonnenquerschnitt zu vergleichmäßigen.

In Stoffaustauschkolonnen, d. h. Absorptions-, Desorptions-, Rektifikations- und Extraktionskolonnen, sowie in Wärmeaustauschkolonnen (sog. Quenchkolonnen) werden geordnete Packungen oder ungeordnete Packungen (d.h. regellose Schüttungen aus Füllkörpern) eingesetzt, die einen möglichst intensiven Stoffübergang zwischen Gas und Flüssigkeit bewirken sollen. Ein intensiver Stoffübergang zwischen den Phasen erfordert neben einer möglichst großen Phasengrenzfläche ein möglichst gleichmäßiges Mengenverhältnis der Gas- und Flüssigkeitsströme an jeder Stelle innerhalb der Packung. Nur wenn beide Bedingungen gleichzeitig erfüllt sind, wird ein Höchstmaß an Stoffübergang zwischen den Phasen erreicht.

Um einen über den Kolonnenquerschnitt möglichst gleichmäßigen Durchsatz an Gas und Flüssigkeit zu erzielen, wird in der Regel oberhalb der Packung ein Flüssigkeitsverteiler angeordnet, der die Flüssigkeit gleichmäßig über den gesamten Kolonnenquerschnitt verteilen soll. Zum Einsatz kommen in der Regel sogenannte Rinnenverteiler, Tüllenverteiler oder Kastenverteiler. Damit wird zumindest im oberen Bereich der Packung ein über den Kolonnenquerschnitt gleichmäßiger Flüssigkeitsdurchsatz erzielt. Auf dem Weg der Flüssigkeit durch die Packung nach unten kommt es jedoch zu einer mehr oder weniger stark ausgeprägten Ungleichverteilung der Flüssigkeitsströmung, beispielsweise infolge von Bachbildung oder Randgängigkeit. Dies wird als Maldistribution bezeichnet. Diese Maldistribution verschlechtert den Stoffübergang in Packungskolonnen in hohem Maße. Daher wird gemäß dem heutigen Stand der Technik nach einer Wegstrecke, die etwa dem sechs- bis achtfachen des Kolonnendurchmessers entspricht, die Packung unterbrochen und die Flüssigkeit neu verteilt. Bei großen Kolonnendurchmessern wird die maximale Packungshöhe auf etwa 6 m begrenzt.

Die über die Kolonnenhöhe wiederholte Neuverteilung der Flüssigkeit ist sehr aufwändig. Sie erfordert jeweils eine Unterbrechung der Stoffaustauschpackung sowie den zusätzlichen Einbau eines Auflagerostes; eines Flüssigkeitssammlers und eines Flüssigkeitsverteilers. In großtechnischen Kolonnen können Flüssigkeitssammler und Flüssigkeitsverteiler zusammen Bauhöhen von bis zu 2 m erreichen. Die mehrfache Neuverteilung der Flüssigkeit vergrößert somit die Bauhöhe einer Kolonne drastisch, ohne dass in diesen Kolonnensektionen ein Stoffübergang stattfindet. Überdies sind die Kosten für Flüssigkeitssammler und Flüssigkeitsverteiler meist höher als die der eigentlichen Stoffaustauschpackung. Daher wird seit langem versucht, Stoffaustauschpackungen so zu gestalten, dass sie auch eine Querverteilung der Gas- und Flüssigkeitsströme bewirken. Verschiedene Bauarten von Verteilelementen sind durch die EP 0151693 B1, die US 4,842,778 und die WO 99/01215 A1 bekannt geworden.

Die EP 1 254 705 A1 zeigt einen kolonnenförmigen Reaktor mit packung- und wärmeübertragenden Mittel zum Durchführen von endo- oder exothermen Reaktionen mit Fluiden als Reaktanten. Die Fluide werden innerhalb einer Reaktorwandung in einer longitudinalen Richtung von einem Eintrittsquerschnitt der Packung zu einem Austrittsquerschnitt gefördert. Das wärmeübertragende Mittel besteht aus auf der Reaktorwandung angeordneten Wärmeübertragungselementen oder ist ein die Reaktorwandung umspülendes Wärmetransportmedium. Die Packung besteht aus einem Element oder aus einer Mehrzahl von Elementen, die in longitudinaler Richtung angeordnete Packungsabschnitte bilden. Jedes Packungselement ist aus einer Mehrzahl von longitudinal ausgerichteten Lagen aufgebaut. Jede longitudinale Lage enthält dicht angeordnete Kanäle. Die Kanäle benachbarter Lagen kreuzen sich. Randbereiche der Packungselemente sind an der Reaktorwandung so ausgebildet, dass die Fluide in diesen Randbereichen von jeder Lage, aus der sie austreten, zu jeweils den benachbarten Lagen übertreten können. Die Kanäle weisen innerhalb eines Packungselements seitliche Wände auf, die für die Fluide undurchlässig sind, oder die einen vernachlässigbar geringen Durchtritt zwischen den benachbarten Kanälen zulassen.

Die US 5,441,793 A betrifft eine Vorrichtung zum Austausch von Wärme und Stoff im Gegenstrom zwischen einer sinkenden Flüssigkeit und einem steigenden Gas. Sie umfasst ein Paket von langwelligen Lamellen mit abwechselnden parallel Wellen, die jeweils in einer im Allgemeinen vertikalen Ebene und gegeneinander angeordnet sind, wobei die Längen schräg verlaufen und in entgegen gesetzter Richtungen von einer Lamelle zur nächsten sinken, wobei die Wellen jeder Lamelle erste und zweite geneigte Kanäle begrenzen, die nach unten bzw. nach oben an einen seitlichen Rand der Lamelle münden. Längs des seitlichen Randes weisen die Lamelle Mittel auf, die für die Flüssigkeit ein Fließhindernis am unteren Ende der ersten Kanäle bilden und ein Rückführen der Flüssigkeit zum Inneren des Lamellenpaketes sicherstellen.

Gegenstand der Erfindung ist eine Stoffaustauschpackung mit erhöhter Querverteilung von Gas und Flüssigkeit bei gleichzeitiger Unterdrückung der Randgängigkeit. Diese Aufgabe wird durch die Merkmale des Anspruchs 1 gelöst. Vorteilhafte Ausgestaltungen sind Gegenstand der Unteransprüche. Mit der Erfindung werden die hinsichtlich des Stoffübergangs toten Kolonnensektionen für Flüssigkeitssammlung und -wiederverteilung vermieden.

Bei der erfindungsgemäßen Lehre werden demnach bekannte und neuartige Packungselemente abschnittsweise verwendet. Die neuartigen Packungselemente bewirken aufgrund ihrer besonderen Gestaltung eine starke Querverteilung und Quervermischung sowohl der lokalen Gasströme als insbesondere auch der lokalen Flüssigkeitsströme, liefern dabei aber zusätzlich auch einen Beitrag zum Stoffübergang.

Die erfindungsgemäße Packung besteht aus parallelen Reihen von getrennten Strömungskanälen, die aus gefalteten Lamellen gebildet und von Reihe zu Reihe wechselnd gegen die Vertikale geneigt sind, und ungefalteten Zwischenlamellen zwischen gefalteten Lamellen, die am seitlichen Rand der Packung Öffnungen enthalten, durch welche die Stoffströme in die parallele Reihe der Strömungskanäle, die eine gegenläufige Orientierung haben, gelangen können, mit einer Vielzahl von Flächenelementen am seitlichen Rand der Zwischenlamellen, die in die Faltungen der parallel stehenden gefalteten Lamellen eingreifen und so die nach außen führenden Strömungskanäle verschließen. Die getrennten Strömungskanäle werden vom Gas und von der Flüssigkeit meist im Gegenstrom durchströmt. Die getrennten Strömungskanäle sind von Reihe zu Reihe wechselnd gegen die Vertikale geneigt, so dass die Stoffströme in unterschiedliche Richtungen horizontal versetzt werden. Am seitlichen Rand des Packungselements sind die Strömungskanäle geschlossen und besitzen gleichzeitig Übergänge in eine parallele Reihe von Kanälen, so dass die Stoffströme vom Randbereich weg geführt werden. Dadurch wird die Randgängigkeit von Gas und Flüssigkeit unterdrückt.

Eine erfindungsgemäße Stoffaustausch- und Wärmetauschkolonne umfasst mindestens zwei Packungen, die übereinander angeordnet und gegeneinander um 90° verdreht sind. Sie wird zur Verbesserung der Quervermischung der Stoffströme verwendet.

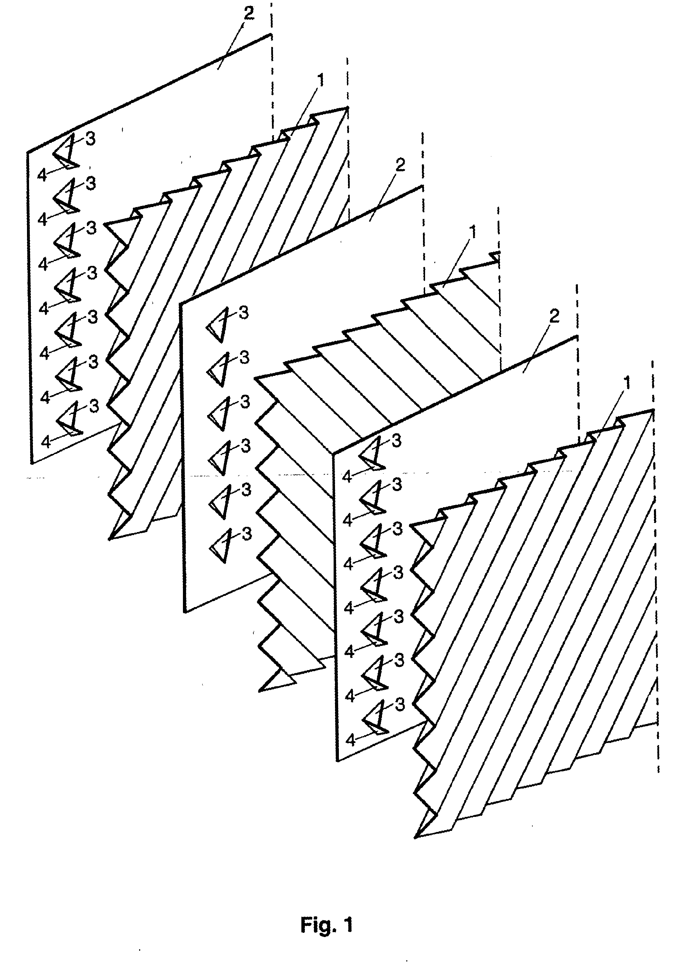

Fig. 1 zeigt einen Ausschnitt einer erfindungsgemäßen Lösung des neuartigen Verteilelementes. Diese lässt sich z. B. durch die Modifikation einer handelsüblichen strukturierten Packung aus gefalteten Blechen erzielen. Zu diesem Zweck wird zwischen den bekannten gefalteten Lamellen 1 jeweils eine ungefaltete Zwischenlamelle 2 angeordnet. Dadurch entsteht zwischen den gefalteten Lamellen 1 und den Zwischenlamellen 2 eine Vielzahl getrennter Strömungskanäle, die gegen die Vertikale geneigt sind, z. B. um +/- 45 Grad. Die Faltungen benachbarter Lamellenreihen sind dabei jeweils spiegelbildlich gegen die Vertikale geneigt. Die dadurch gebildeten Strömungskanäle besitzen unterschiedliche

Orientierungen, sodass die Gas- und Flüssigkeitsströme abwechselnd in unterschiedliche Richtungen horizontal versetzt werden. Dies bewirkt die gewünschte Querverteilung der lokalen Gas- und Flüssigkeitsströme nach "links" und nach "rechts". Um auch eine Querverteilung nach "vorne" und nach "hinten" zu erzielen, werden jeweils mindestens zwei Verteilelement übereinander angeordnet, die gegeneinander um 90° verdreht sind.

Die auf diese Weise erzielte intensive Querverteilung der lokalen Gas- und Flüssigkeitsströme führt in den Randzonen der Packung zu einer unerwünschten Randgängigkeit der Ströme. Um dem entgegenzuwirken, befinden sich in den Endzonen der Zwischenlamellen winkelförmige Einstanzungen, die dreieckige Flächenelemente an zwei Seiten begrenzen. Diese Flächenelemente 4 werden so aus der Fläche herausgebogen, dass sie in die Faltungen der davor bzw. dahinter liegenden gefalteten Lamellen 1 eingreifen und so die nach außen führenden Strömungskanäle (flüssigkeitsseitig) verschließen. Durch das Umbiegen der dreieckigen Flächenelemente 4 (Laschen) entstehen in den Zwischenlamellen Öffnungen 3, durch welche die Flüssigkeit aus den nach außen führenden Kanälen in die parallel verlaufenden Kanäle strömen kann, die eine gegenläufige Orientierung haben. Dadurch wird am seitlichen Rande der Packung die Flüssigkeit umgelenkt und in das Innere der Packung zurückgeführt. Auf diese Weise wird die unerwünschte Randgängigkeit der Flüssigkeit wirkungsvoll vermieden.

Die aus den Zwischenlamellen herausgebogenen Flächenelemente 4 (Laschen) haben somit eine zweifache Funktion. Sie verschließen einerseits die Strömungskanäle am Rande der Packung und sie bilden andererseits Öffnungen 3 in den ebenen Zwischenlamellen, durch welche die Flüssigkeit in die parallele Reihe der Strömungskanäle, die eine gegenläufige Orientierung haben, gelangen kann. Dabei ist es erforderlich, dass die Flächenelemente 4 an den beiden seitliche Enden der Zwischenlamelle in unterschiedliche Richtungen aus der Lamellenebene herausragen. In einer vorteilhaften Ausführung wird die Zwischenlamelle hierzu geteilt.

Diese Bauweise ermöglicht auch eine weitgehende Unterdrückung der Randgängigkeit des Gases, da ein Teil des nach außen geführten Gases vor Verlassen der Packung durch die Öffnungen in den Zwischenlamellen in die parallelen Kanäle strömen kann, die eine gegenläufige Orientierung haben.

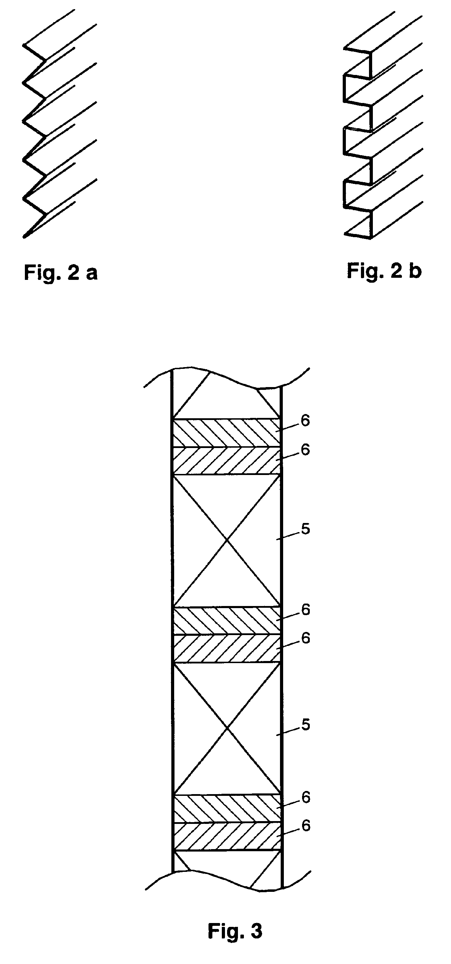

Die Form der Faltungen bleibt dabei nicht auf die dreieckige Ausführung (Fig. 2a) beschränkt. Als weiteres Beispiel ist in Fig. 2b eine rechteckige Ausführung dargestellt.

Dementsprechend besitzen in diesem Fall die Flächenelemente 4 eine rechteckige Form. Eine Form der Ausführung lässt sich auch durch das Zusammenfügen von Rohrprofilen erzielen, die durch spezielle Bearbeitung der oben genannten, erfindungsgemäßen Funktionsweise genügen.

Fig. 3 zeigt die sektionsweise wechselnde Anordnung von bekannten geordneten oder ungeordneten Packungen 5 und von den erfindungsgemäßen Packungen mit erhöhter Quervermischung 6. Die Packung wird ohne räumliche Unterbrechung aufgebaut. Wichtig ist, dass im Gegensatz zu den üblichen Flüssigkeitsverteilern auch in den Verteilelementen ein Stoffübergang zwischen den Phasen geleistet wird. Dabei weisen die neuartigen Verteilelemente eine geringe Sensitivität bezüglich eines nicht exakt horizontalen Einbaus auf.

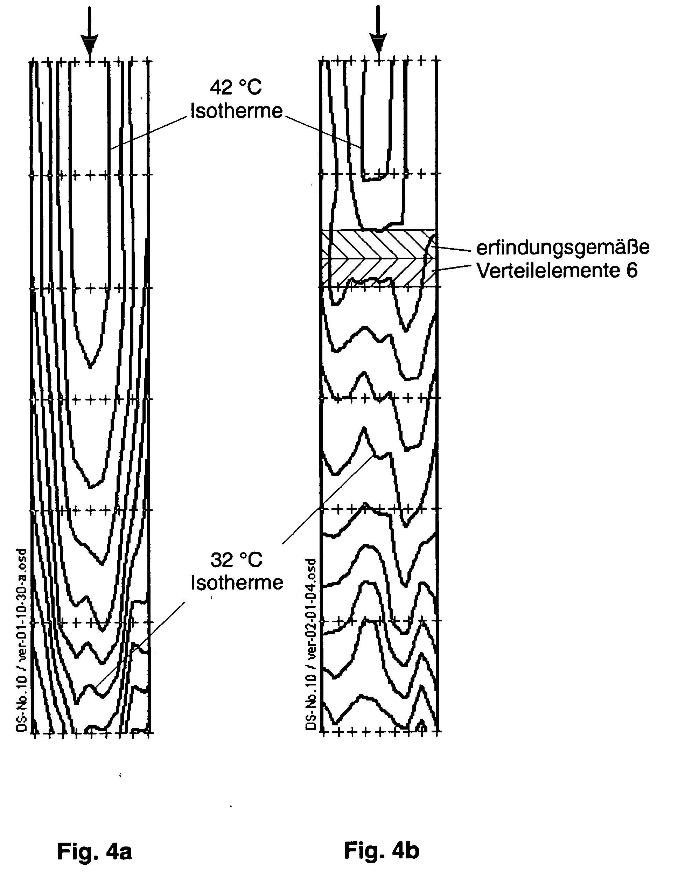

Die Wirksamkeit des neuartigen Verteilelements wird in Fig. 4 gezeigt. Zugrunde liegen experimentelle Untersuchungen an einer Kolonne mit einem Durchmesser von 0,63 m, die mit 25 mm Pall-Ringen aus Metall gefüllt ist. Die Kolonne wurde mit warmen Wasser und Luft im Gegenstrom betrieben. Der im Gegenstrombetrieb stattfindende Stoffübergang von Wasser aus der flüssigen in die gasförmige Phase (= Verdunstungsprozess) bewirkt wegen der großen Verdampfungsenthalpie von Wasser eine deutliche Abkühlung der Flüssigkeit, die relativ einfach messtechnisch erfasst werden kann. Aus den Messwerten wird der örtliche Verlauf der Flüssigkeitsisothermen bestimmt. Die Fig. 4 zeigt einige Isothermen in einem Längsquerschnitt der Packung. Bei Vorliegen einer Kolbenströmung ohne Maldistribution müssten die Isothermen horizontale Geraden sein. Abweichungen davon sind auf die Maldistribution zurückzuführen. In erster Näherung können die Flüssigkeitsisothermen auch als Linien gleicher Verweilzeit der Flüssigkeit interpretiert werden. D.h. tieferliegende Bereiche einer Isothermen kennzeichnen Zonen mit einem erhöhten Flüssigkeitsdurchsatz.

Dargestellt sind zwei Versuchsergebnisse mit zentraler, punktförmiger Flüssigkeitsaufgabe am Kopf und gleichmäßiger Anfangsverteilung des Gases am Sumpf der Kolonne. In Fig. 4a besteht die Kolonnenpackung auf ihrer gesamten Höhe von etwa 3,7 m ausschließlich aus der konventionellen Füllkörperschüttung 5. In Fig. 4b wurden im schraffiert dargestellten Bereich zwei der neuartigen Stoffaustauschpackungselemente 6 eingebaut. Beide Beispiele zeigen signifikante Unterschiede hinsichtlich der Flüssigkeitsverteilung und der Trennwirkung.

Bei der Ausführung ohne neuartigem Verteilelement (Fig. 4a) findet nur eine allmähliche Reduzierung der durch die punktförmige Flüssigkeitsaufgabe aufgeprägten Maldistribution statt. Anhand der überwiegend vertikalen Ausrichtung der Isothermen lässt sich erkennen, dass die Flüssigkeit vorwiegend in der Mitte nach unten strömt. Selbst am Sumpf der Kolonne besteht noch ein hohes Maß an Maldistribution. Dies beweist die geringe Quervermischung der Flüssigkeitsströmung innerhalb der reinen Füllkörperschüttung.

Die Ausführung mit neuartigen Verteilelementen (Fig. 4b) zeigt ein ähnliches Verhalten lediglich im Einlaufbereich oberhalb der beiden Verteilelemente. Die Veränderung der Lage und Form der Isothermen darunter ist auf die Wirkung der neuartigen Verteilelemente zurückzuführen. Die zunächst annähernd vertikal verlaufenden Isothermen werden schlagartig in eine vorwiegend horizontale Ausrichtung korrigiert. Das neuartige Verteilelement bewirkt überdies eine Temperaturänderung, d. h. es leistet einen Beitrag zum Stoffübergang. Aus dem Isothermenverlauf direkt unter den beiden neuartigen Stoffaustauschpackungen kann die wichtige Tatsache abgelesen werden, dass die erfindungsgemäße Problemlösung mit Umlenkung der Flüssigkeit die Randgängigkeit wirkungsvoll unterdrückt.

Die Auswirkungen der Verwendung der neuartigen Stoffaustauschelemente auf die Stoffaustauschleistung der Kolonne sind drastisch. Dies kann in Fig. 4 sehr einfach z.B. aus der Lage der 32 °C Isotherme erkannt werden. Diese liegt in Fig. 4b sehr viel weiter oben in der Kolonne als in Fig. 4a. Dies bedeutet, dass der Stoffübergang sehr viel besser ist. Ausgedrückt durch die Zahl der Übergangseinheiten ergibt sich ein Unterschied etwa um den Faktor 2,5.

Zusammenfassend lässt sich feststellen, dass die neuartige Stoffaustauschpackung durch ihre spezifische Gestaltung in der Lage ist, eine hohe Quervermischung zu leisten und so die schädlichen Auswirkungen der Flüssigkeitsmaldistribution aufzuheben bzw. zu minimieren. Weitere hier nicht aufgeführte Versuchsreihen haben gezeigt, dass eine Verbesserung der Strömung bei allen Arten der Maldistribution erzielt wird. Eine Vergleichmäßigung der Flüssigkeitsverteilung und damit verbunden eine signifikante Erhöhung der Stoffübergangsleistung ergibt sich insbesondere auch für eine vorgegebene Randgängigkeit der Flüssigkeit oder für zonale Flüssigkeitsungleichverteilungen.

## Patentansprüche

1. Packung für Stoffaustausch- und Wärmetauschkolonnen bestehend aus parallelen Reihen von getrennten Strömungskanälen, die aus gefalteten Lamellen (1) gebildet und von Reihe zu Reihe wechselnd gegen die Vertikale geneigt sind, **gekennzeichnet durch** ungefaltete Zwischenlamellen (2) zwischen gefalteten Lamellen (1), die am seitlichen Rand der Packung Öffnungen (3) enthalten, **durch** welche die Stoffströme in die parallele Reihe der Strömungskanäle, die eine gegenläufige Orientierung haben, gelangen können, mit einer Vielzahl von Flächenelementen (4) am seitlichen Rand der Zwischenlamellen (2), die in die Faltungen der parallel stehenden gefalteten Lamellen (1) eingreifen (urspr. Anspruch 5) und so die nach außen führenden Strömungskanäle verschließen.

2. Packung nach Anspruch 1, **gekennzeichnet durch** winkelförmige Einstanzungen im seitlichen Rand der Zwischenlamellen (2), die die Flächenelemente (4) begrenzen, die aus den Zwischenlamellen (2) herausgebogen sind.

3. Stoffaustausch- und Wärmetauschkolonne mit mindestens zwei Packungen nach einem der obigen Ansprüche, die übereinander angeordnet und gegeneinander um 90° verdreht sind.

4. Verwendung einer Packung nach Anspruch 1 oder 2 zur Verbesserung der Quervermischung der Stoffströme.

## Claims

1. A packing for material exchange and heat exchange columns consisting of parallel rows of separate flow channels, which are formed from folded lamellae (1) and are inclined from row to row alternately against the vertical, **characterized by** unfolded intermediate lamellae (2) between folded lamellae (1), which contain openings (3) on the lateral edge of the packing, through which the material flows can arrive into the parallel row of the flow channels, which have an orientation in the opposite direction, with a plurality of surface elements (4) on the lateral edge of the intermediate lamellae (2), which engage into the folds of the folded lamellae (1) which stand parallel and which thus close the outwardly leading flow channels.

2. Packing according to Claim 1, **characterized by** angular stamped-in portions in the lateral edge of the intermediate lamellae (2), which delimit the surface elements (4), which are bent out from the intermediate lamellae (2).

3. A material exchange and heat exchange column with at least two packings according to one of the above claims, which are arranged one over another and are rotated through 90° with respect to one another.

4. A use of a packing according to Claim 1 or 2 to improve the crossmixing of the material flows.

## Revendications

1. Garniture d'étanchéité pour des colonnes d'échange de substances et d'échange thermique se composant de rangées parallèles de canaux d'écoulement séparés qui sont formés par des lamelles pliées (1) et qui sont inclinés contre la verticale en alternant d'une rangée à l'autre, **caractérisée par** des lamelles intermédiaires non pliées (2) entre des lamelles pliées (1), qui comportent des ouvertures (3) sur le bord latéral de la garniture d'étanchéité, à travers lesquelles les écoulements de substance peuvent parvenir dans la rangée parallèle des canaux d'écoulement qui ont une orientation inversée, avec une pluralité d'éléments plans (4) sur le bord latéral des lamelles intermédiaires (2) qui se mettent en prise dans les plis des lamelles pliées (1) parallèles et ferment ainsi les canaux d'écoulement menant vers l'extérieur.

2. Garniture d'étanchéité selon la revendication 1, **caractérisée par** des estampages à angles dans le bord latéral des lamelles intermédiaires (2), qui délimitent les éléments plans (4) qui font saillie en courbe hors des lamelles intermédiaires (2).

3. Colonne d'échange de substances et d'échange thermique comprenant au moins deux garnitures d'étanchéité selon l'une des revendications précédentes qui sont disposées l'une sur l'autre et tournées l'une contre l'autre de 90°.

4. Utilisation d'une garniture d'étanchéité selon la revendication 1 ou 2 pour améliorer le mélange transversal des écoulements de substance.
